Europäisches Patentamt

European Patent Office

Office européen des brevets

(11) Publication number: **0 079 797**
**A2**

# EUROPEAN PATENT APPLICATION

(21) Application number: **82306088.4**

(22) Date of filing: **16.11.82**

(51) Int. Cl.³: **A 23 B 4/14**
**A 23 B 4/02**

(30) Priority: **17.11.81 DK 5096/81**

(43) Date of publication of application:
**25.05.83 Bulletin 83/21**

(84) Designated Contracting States:
**BE DE FR GB NL SE**

(71) Applicant: **MATCON RADGIVENDE INGENIORFIRMA ApS**
**45 Generatorvej**
**DK-2730 Herlev(DK)**

(72) Inventor: **Joensen, Jon Olavur**
**4 Pilekaeret**
**DK-2840 Holte(DK)**

(74) Representative: **Carpmael, John William Maurice et al,**
**CARPMAELS & RANSFORD 43 Bloomsbury Square**
**London, WC1A 2RA(GB)**

(54) **Process for increasing the keeping qualities and water retention of meat from marine animals and improving its consistency.**

(57) The keeping qualities of fish, molluscs and crustaceans are increased by treatment with an aqueous solution of one or more of the compounds NaOH, KOH, Ca(OH)$_2$, Na$_2$CO$_3$ and K$_2$CO$_3$. At the same time one achieves a water retention increase and an improvement in consistency.

Process for increasing the keeping qualities and water retention of meat from marine animals and improving its consistency.

The invention relates to a process for increasing the keeping qualities and water retention of meat from marine animals and improving its consistency.

In the present specification and claims, the expression marine animals is used to cover all fish, molluscs and crustaceans, whether originating from sea water or fresh water and whether caught in their natural environment or bred.

As is known, raw marine animals and meat therefrom keep only for a very short period, even when kept on ice or in cold store at temperatures about $0°C$.

The poor keeping qualities may reduce the marketing possibilities of marine animals and increase the costs involved in catching them, due to the fact that the fishing vessels will have to land their harvest more often than would be the case, if this was not necessary to avoid deterioration of the catch. For these, and other obvious reasons, there is a great need for a process for increasing the keeping qualities of marine animals and their meat, while at the same time the treated product retains its character of fresh raw material, and even a minor increase in keeping qualities will result in substantial advantages in terms of labour and economy.

Processes are known, in which the keeping qualities of products of the kind in question are increased by keeping the products in a brine containing an organic acid usually combined with an organic bactericidal or bacteriostatic substance. Such processes are, however, not suitable for the purpose which is sought achieved by the process according to the invention, as they are too expensive, alter too much the character of the raw products and, furthermore, are not quite acceptable from a health point of view, when the treated product has the character of a basic food article, which is the case for some fresh fish products where a content of organic bactericidal or bacteriostatic additives is not allowed or is hazardous.

The Swedish published specification No.366 467 discloses a process for the treatment of raw fish, raw shellfish and fresh meat with a view to improving their keeping qualities, by which process the fresh raw material is treated with an aqueous solution containing about 0.5-10.0% sodium acetate of a pH of about 7.0-10.0. Although the published specification characterizes this treatment as cheap, the cost of sodium acetate can, however, be appreciable, e.g. when a whole shipload is to be treated. Consequently, there is still a need for a cheap and effective process for the purpose in question.

It has now been found that by treating the marine animals with a base as specified in the following, it is possible not only to improve the keeping qualities but also to achieve a desirable increase in water retention and an improvement of consistency of the meat of marine animals, and additional advantages in some cases, as explained below.

The process according to the invention is characterized in that the marine animals or the meat recovered therefrom are treated with an aqueous solution of a base which is a solution or suspension of sodium, potassium or calcium hydroxide, or of sodium or potassium carbonate or of a plurality of these bases, to reach immediately below the surface of the marine animals or the meat recovered therefrom a pH between 6.6 and 9.5, and so that by the treatment the pH increases by at least 0.2 units, preferably 0.7-1,5 units.

The stated pH values refer to the values measured by introducing a glass electrode into the areas in question of the marine animals or their meat, or when the dimensions of the marine animals in question make this impossible, they refer to the values measured with a glass electrode in a suspension of meat from the area in question comminuted and suspended in an equal quantity of water. In this connection it is observed that substantially the same pH readings are obtained, whether the glass electrode is introduced into the fish meat or immersed in an aqueous suspension of meat from the area in question of the fish.

The treatment results not only in an improvement of the keeping qualities but also in an increased water retention of the treated meat originating from marine animals. This improvement in water retention is greater than the one achieved by the known treatment with polyphosphate, and the weight increase of the meat which is achieved as a result of the improved water retention can by no means be regarded as an adulteration of the product but, on the contrary, as an improvement thereof, since in connection with the increased water retention the consistency of the meat improves so that it becomes more resilient. This improvement of consistency is retained when the meat is prepared.

The processes determining the improved keeping qualities and water retention have not been elucidated, but experiments seem to indicate that it is a question of changes of a reversible character.

The increased pH value does not result in changes in the taste of the treated products.

It has to be noted that the use of inorganic bases in connection with fish processing is known for quite different purposes. Thus, it is usual to treat mackerel with a warm, strong sodium hydroxide solution in order to facilitate skinning. This treatment is, however, of so short a duration that it does not result in any

4

increase in the pH value of the fish meat itself and, consequently, the purpose aimed at by the present process is not achieved.

It should furthermore be noted that for the preparation of "lutefisk", it is known to soak stockfish in a solution of potassium carbonate or sodium carbonate. Since, however, use is made in that case of a starting material possessing good keeping qualities and the alkaline agents are used for obtaining a desired flavour, this application to lutefisk has in no manner made it obvious to a skilled person to use a base solution as the one described in the present specification on non-preserved raw materials.

The process according to the invention can be carried out in different ways and at different stages during the processing of the products.

The stated bases are usually applied in concentrations of between 0.1 and 1 w/v %, as far as the alkali metal hydroxides are concerned, whereas the other bases coming into consideration can be used in substantially higher concentrations.

The above-stated result with regard to the pH value immediately below the surface of the treated products can be achieved with a comparatively long treatment with a weak base solution as well as with a shorter treatment with a stronger solution. The latter solution must, however, not be so concentrated as to produce irreversible alterations, especially of the surface of the products.

Usually, the treatment time is from about 15 minutes to some days, typically from 1 to 24 hours, and it will generally be terminated with a rinsing with water

The treatment can, however, also be carried out with a base solution or suspension so diluted that a subsequent rinsing is superfluous, as the amount of base wetting the product after the base treatment will be so small that it is bound by reaction with the product which is treated.

In modern fishing vessels it is common to keep the catch in refrigerated sea water in tanks for several days until the landing takes place. In such cases, the process can suitably be carried out by adding to the refrigerated sea water to a pH value of 10-11. After some time, the pH of the sea water will fall to about 9 and the catch can remain therein for several days without the treatment being excessive.

In another convenient embodiment of the process, one simply cools the catch in ice containing a base, e.g. sodium hydroxide in a concentration of 0.1-0.2% by weight.

The duration of the treatment and the concentration of the applied base solution are preferably adjusted to reach a pH value between 7.5 and 9, preferably between 7.5 and 8.5, immediately underneath the surface of the treated product.

The process is preferably carried out so that the marine animals or the meat recovered therefrom are, in connection with the base treatment, or prior to or after the base treatment, cooled down to between 5 and -1°C and kept at this temperature after the treatment. It is, however, possible also to take advantage of the improved keeping qualities achieved by means of the treatment in connection with processing operations where no cooling takes place, e.g. salting and smoking.

The process can, for instance, be carried out in fishing vessels where the base treatement is effected simultaneously with the cooling of the catch. The said effect with regard to increased keeping qualities as well as increased water retention can, however, also be achieved at different steps of the processing of the products, whether these are raw or cooked and whether they are whole, eviscerated, cut into pieces, skinned, shelled, etc.

In connection with the treatment of shrimp prior to peeling a particular advantage is achieved, since in addition to the increased keeping qualities, improved consistency and increased yield as a result of higher water content, the peeling operation is facilitated with a corresponding improved result, owing not only to the fact the increased resiliency of the shrimp meat facilitates the peeling but also to the fact that the treatment seems to cause the shrimp meat to be more easily loosened from the shells.

In the treatment of raw whole shrimp, good results have been achieved by treatment with an aqueous 0.1-1.0 w/v % sodium hydroxide solution for 0.5-10 hours at a temperature between 5 and -1°C.

As it may be advantageous first to subject the marine animals to be treated to a very high pH for a short time, followed by storage at a somewhat lower pH, the treatment can suitably be carried out in a solution containing both a hydroxide and a carbonate, the hydroxide amount being adjusted so that the initial high pH value of the solution after some time of action will fall to the desired value, wherefrom it only falls slowly due to the carbonate content.

For carrying out this embodiment of the process, the invention comprises an agent consisting of a mixture of one or more of the said hydroxides with one or more of the said carbonates. Such a suitable agent may contain sodium and/or potassium hydroxide and sodium and/or potassium carbonate in a ratio by weight between 1:20 and 2:1, typically for instance 1:2. This agent may consist exclusively of these bases or it may contain other preserving or other product-improving substances, such as acetates or polyphosphates, or solvents or fillers and adjuvants, e.g. for achieving and retaining free-flowing properties and preventing caking.

The process will be illustrated in more detail by means of the following examples:

7

## Example 1

100 kg shrimp (of a size corresponding to 100-125 shrimp per kg) harvested at the Disco Bank in January were in a conventional manner rinsed in sea water at a temperature between 0 and $-1^{\circ}C$ and then, according to the process of the invention, treated with a 0.5 w/v % sodium hydroxide in a water-ice mixture for 2 hours. Thereafter the shrimp were in a conventional manner stored in ice in 90 litre boxes.

The pH of an aqueous suspension of meat from the untreated shrimp was 7.1 while it reached 8.2 in a corresponding suspension of shrimp meat from the treated shrimp.

The shrimp treated as described above remained in good condition for 18 days (estimated from an organoleptic point of view). Another lot of shrimp which were treated in a corresponding manner but without use of sodium hydroxide and stored in the same manner kept for 8-9 days.

The shrimp were cooked and peeled mechanically in a conventional manner. A peeled shrimp yield of 28% was obtained.

By a corresponding cooking and peeling of shrimp which had not been treated with sodium hydroxide, the yield was 23%.

The achieved yield increase is ascribed not only to the increased water content but also to the fact that the treated shrimp are easier to peel.

The peeled shrimp originating from the raw product treated with sodium hydroxide had the desired resilient consistency and were in this respect superior to shrimp obtained from the untreated raw product.

## Example 2

100 kg blue whiting ("blåhvilling") caught near the Faroes in January were kept in non-eviscerated condition in refrigerated sea water (RSW) together with 0.5 kg

8

hydrated lime $(Ca(OH)_2)$ for 24 hours. The lime-containing sea water was then replaced by new refrigerated sea water and the fish were stored therein at a temperature between 0 and $1^{\circ}C$. The thus treated blue whitings retained for 8-10 days after the catch their good condition, estimated as the ability to give after mechanical filleting a satisfactory product, seen from an organoleptical point of view.

Blue whiting treated in a corresponding manner but without using hydrated lime kept only for 3-4 days.

The mechanical filleting of blue whiting treated with hydrated lime gave a fillet quantity corresponding to a yield of 28%, while the raw product which had not been treated with hydrated lime gave a yield of 23%.

When estimating the consistency of raw as well as heat-treated fillets, it was found that fillets from fish treated with hydrated lime were, both in raw state and after heat treatment, more resilient than fillets from fish which had not been treated with $Ca(OH_2)$.

A glass electrode introduced into the upper layer of the meat of the blue whiting showed a pH of 6.8, which value increased to 7.6 after a 24 hours treatment with hydrated lime.

Example 3

Cod fillets were immersed in an aqueous 0.5 w/v% sodium carbonate solution at $0^{\circ}C$ for 4 hours and then rinsed in cold water.

A pH measurement direct in the fish meat prior to the treatment showed a value of 6.7, and after the treatment a value of 7.7.

The treated cod fillets were stored at $0^{\circ}C$ and remained in good condition for 11 days.

Cod fillets which had not been treated with sodium carbonate but just rinsed with cold water kept for 8 days under the same conditions.

In this case also, the base treatment had resulted in an improvement in consistency which applied not only to the raw but also to the heat-treated fillets.

### Example 4

100 kg blue whiting caught near the Faroe islands in February were kept in non-eviscerated condition in refrigerated sea water (RSW) at $1^{O}C$. The quantity of sea water was 50 kg and 0.15 kg sodium hydroxide and 0.25 kg anhydrous potassium carbonate were added thereto. The blue whiting was kept refrigerated to $1^{O}C$ in this basic sea water for 8 days. Within this period, the pH in the fish meat increased from 6.8 to 7.8, while the pH of the sea water wherein the fish was refrigerated fell to 8.

After having been refrigerated in this manner for 8 days, the fish was still fitted as starting material for mechanical filleting with a satisfactory result, seen from an organoleptic point of view. As stated in Example 2, a refrigeration period of only 3-4 days is permissible, when sea water without additive is used.

PATENT CLAIMS

1. A process for increasing the keeping qualities and water retention of meat from marine animals and improving its consistency, characterized in that the marine animals or the meat recovered therefrom are subjected to a treatment with an aqueous base which is a solution or a suspension of sodium, potassium or calcium hydroxide or of sodium or potassium carbonate, or of a plurality of these bases, to reach immediately below the surface of the marine animals or the meat recovered therefrom a pH between 6.6 and 9.5, and so that by the treatment the pH increases by at least 0.2 units, preferably 0.7-1.5 units.

2. A process as claimed in claim 1, characterized in that the pH in the meat increases by at least 0.4 units to a value between 7 and 9.5.

3. A process as claimed in claim 1 or 2, characterized in that the marine animals or the meat recovered therefrom are, in connection with the base treatment, or prior to or after the base treatment, refrigerated to between 5 and -1$^{o}$C and stored at this temperature.

4. A process according to claim 1, 2 or 3, characterized in that the duration of the treatment and the concentration of the used base solution are adjusted to reach a pH between 7.5 and 9, preferably 7.5 and 8.5, immediately underneath the surface of the marine animals.

5. A process as claimed in any of the preceding claims, characterized in that raw, whole shrimp are treated with an aqueous 0.1-1.0 w/v % NaOH solution for 0.5-10 hours at a temperature between 5 and -1$^{o}$C.

6. A process as claimed in any of the preceding claims, characterized in that the base treatment is discontinued by rinsing with cold water.

7. A process as claimed in any of the claims 1 - 5, characterized in that the concentration of aqueous base solution is so low that a rinsing away of the base solution is superfluous.

8.    An agent for use in carrying out the process as claimed in claims 1 - 4, <u>characterized</u> in that it contains sodium and/or potassiuem hydroxide and sodium and/or potassium carbonate in a weight ratio of hydroxide compound to carbonate compound between 1:20 and 2:1, preferably about 1:2.